# EUROPÄISCHE PATENTSCHRIFT

(11) **EP 0 884 364 B1**
(45) Veröffentlichungstag und Bekanntmachung des Hinweises auf die Patenterteilung: **25.10.2000**
(21) Anmeldenummer: 98109633.2
(22) Anmeldetag: 27.05.1998
(51) Int. Cl.: C08L 59/02, C08K 3/26, C08L 39/06

(54) **Gleitreibebeständige Formmassen**
Wear resistant moulding compositions
Masses à mouler résistant à l'usure

(30) Priorität: 13.06.1997 DE 19725054
(43) Veröffentlichungstag der Anmeldung: 16.12.1998
(73) Patentinhaber: BASF AKTIENGESELLSCHAFT, 67056 Ludwigshafen (DE)
(72) Erfinder: Kielhorn-Bayer, Sabine, Dr., 67133 Maxdorf (DE); Sänger, Dietrich, Dr., 67227 Frankenthal (DE)

(56) Entgegenhaltungen:
- EP-A- 0 363 752
- EP-A- 0 730 004
- DE-A- 2 942 744
- DE-A- 4 445 316
- DATABASE WPI Section Ch, Week 9514 Derwent Publications Ltd., London, GB; Class A13, AN 95-106826 XP002073370 & WO 95 06087 A (POLYPLASTICS KK)

## Beschreibung

Die Erfindung betrifft thermoplastische Formmassen, enthaltend
A) 10 bis 99 Gew.-% eines Polyoxymethylenhomo- oder Copolymerisats,
B) 0,1 bis 5 Gew.-% eines Polyvinylpyrrolidons,
C) 0,1 bis 10 Gew.-% eines Calciumcarbonates,
D) 0 bis 80 Gew.-% weiterer Zusatzstoffe und Verarbeitungshilfsmittel,
wobei die Summe der Gewichtsprozente der Komponenten A) bis D) jeweils 100 % ergeben.

Weiterhin betrifft die Erfindung die Verwendung der erfindungsgemäßen thermoplastischen Formmassen zur Herstellung von Fasern, Folien und Formkörpern sowie die hierbei erhältlichen Formkörper jeglicher Art.

Polyacetale weisen aufgrund ihrer hohen Kristallinität eine glatte und harte Oberfläche auf, weshalb diese sich gut für gleitreibungsbeanspruchte Formteile eignen. Selbst bei trockener Reibung ist nur mit einem geringen Verschleiß bei annehmbaren Gleitreibungskoeffizienten zu rechnen. Der Gleitreibekoeffizient wird mit zunehmender Oberflächenrauheit des Gleitpartners kleiner, der Gleitverschleiß nimmt jedoch zu.

Eine Verbesserung des Gleit- und Abriebverhaltens von Polyoxymethylenen wird z.B. durch Zugabe von Calciumcarbonat in Kombination mit Glycerindistearat (siehe DE-A 15 44 921) erzielt, welche jedoch nur bei geringer Rauheit des Gleitpartners einsetzbar ist.

Ein weiterer geeigneter Zusatz ist MoS₂, welcher aus H.D. Sabel, Kunststoffe 70 (1980), S. 641 ff und W. Schütte, Kunststoffe 74 (1984), S. 575 ff bekannt ist. Derartige POM-Formmassen weisen in Luft eine schlechtere thermische Stabilität auf. Während der Verarbeitung entstehen in der Schmelze sauer wirkende S-haltige Substanzen, die die POM-Ketten spalten und Formaldehyd freisetzen. Durch Pufferzugabe oder Säurefängereinsatz können die thermischen Stabilitäten zwar wesentlich verbessert werden, sind aber im Vergleich zu den gewünschten Standardwerten noch um das 16-fache höher. Außerdem ist die dunkle, metallische Eigenfarbe des MoS₂ nicht immer von Vorteil.

Der Zusatz von Polyvinylpyrrolidon (PVP) zu Polyacetalen sowie gegebenenfalls anderen Additiven ist aus den folgenden Schriften bekannt.
1. JP-A 55/052 338 beschreibt eine Mischung aus einem Ethylenoxid-Trioxan-Copolymeren, PVP, sterisch gehinderten Phenolen und Cyanoguanidin mit verbesserter thermischer Stabilität.
2. FR-A 1579896 beschreibt die Behandlung eines Polyoxymethylens mit Dioxepan als Comonomerem in einer Lösung in Polyvinylpyrrolidon zur Verbesserung der thermischen Stabilität.
3. DE-A 1911790 beschreibt mit Essigsäureanhydrid verkapptes Polyoxymethylen, dem ebenfalls zur Verbesserung der thermischen Stabilität Polyvinylpyrrolidonlösung bei der Herstellung zugesetzt wird.
4. GB-A 1033168 beschreibt die Verbesserung der thermischen Stabilität von Polyoxymethylen mit Polyvinylpyrrolidon und Antioxidantien.
5. DE-A 2254898 beschreibt die Zweikomponentenfaserherstellung durch Verspinnen einer Emulsion, die aus einer Lösung eines hydrophoben Polymers und einer Lösung eines hydrophilen Polymers besteht. Die hydrophoben Polymere können u.a. Polyamide, Polyester oder Polyoxymethylen sein. Die hydrophoben Polymere können u.a. Polyacrylamid oder Polyvinylpyrrolidon sein.

Aufgabe der vorliegenden Erfindung war es daher, thermoplastische Formmassen zur Verfügung zu stellen, welche eine verbesserte Gleitreibung aufweisen unter gleichzeitigem weitergehenden Erhalt der mechanischen Eigenschaften und der Fließfähigkeit.

Demgemäß wurden die eingangs definierten thermoplastischen Formmassen gefunden. Bevorzugte Ausführungsformen sind den Unteransprüchen zu entnehmen.

Überraschenderweise wurde gefunden, daß die guten Gleitreibeeigenschaften von Polyoxymethylenen durch Kombination von CaCO₃ mit Polyvinylpyrrolidon verbessert werden können, wobei die mechanischen Eigenschaften erhalten bleiben.

Als Komponente A) enthalten die erfindungsgemäßen Formmassen 10 bis 99, vorzugsweise 30 bis 99 Gew.-% und insbesondere 90 bis 98 Gew.-% eines Polyoxymethylenhomo- oder -copolymerisats.

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten -CH₂O- noch bis zu 50, vorzugsweise 0,1 bis 20, insbesondere 0,3 bis 10 mol-% und ganz besonders bevorzugt 2 bis 6 mol-% an wiederkehrenden Einheiten 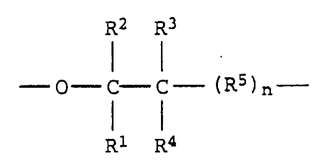 wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine -CH₂-, -CH₂O-, eine C₁-bis C₄-Alkyl- oder C₁-bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 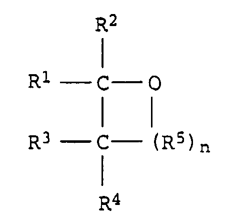 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie linare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 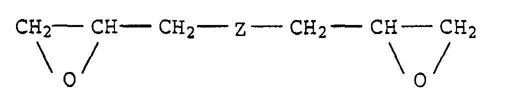 und/oder 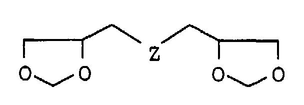 wobei Z eine chemische Bindung, -O-, -ORO- (R= C₁-bis C₈-Alkylen oder C₂-bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) M_{w} im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Als Komponente B) enthalten die erfindungsgemäßen Formmassen 0,1 bis 5, vorzugsweise 0,1 bis 3 und insbesondere 0,5 bis 2 Gew.-% eines Polyvinylpyrrolidons (PVP).

Derartige Polymerisate sind dem Fachmann bekannt und in der Literatur beschrieben.

Die Homopolymeren werden im allgemeinen durch Polymerisation von Vinylpyrrolidon in Gegenwart von Radikalstartern und gegebenenfalls Katalysatoren hergestellt.

Diese weisen üblicherweise ein mittleres Molekulargewicht (Gewichtsmittel M_{w}) von 5000 bis 2 Mio, vorzugsweise von 7000 bis 1,5 Mio auf, gemessen mittels Weitwinkel-Lichtstreuung in wässrigen Lösungen bei Raumtemperatur. Die maximale Konzentration der wässrigen Lösungen sollte im Bereich der Grenzviskositäten liegen. Für nähere Einzelheiten sei auf P. Kratochvil, Classical light scattering from polymer solutions, Elsevier, 1987, verwiesen.

Im Handel sind Polyvinylpyrrolidone beispielsweise unter dem Warenzeichen Luviskol® K der BASF AG erhältlich.

Geeignete PVP-Copolymerisate enthalten bis zu 80, vorzugsweise bis zu 40 Gew.-% weiterer mit PVP copolymerisierbare Monomere wie Vinylimidazol, Vinylcaprolactam, Vinylacetat und/oder Vinylpropionat, wobei Vinylacetat oder/und Vinylpropionat als Comonomere bevorzugt sind.

Derartige Produkte sind im Handel beispielsweise als Luviskol® VA oder Luviskol® VAP der BASF AG erhältlich und werden wie die Homopolymerisate üblicherweise als Filmbildner für Haarsprays oder als Waschmittelzusätze (Farbinhibitoren) eingesetzt.

Als Komponente C) enthalten die erfindungsgemäßen Formmassen von 0,1 bis 10, vorzugsweise 0,1 bis 7,5, vorzugsweise 0,1 bis 5 und besonders bevorzugt von 0,5 bis 2 Gew.-% eines Calciumcarbonates.

Besonders bevorzugt im Rahmen der vorliegenden Erfindung enthalten die erfindungsgemäßen Formmassen die Komponente C) als teilchenförmigen Füllstoff. Bevorzugte mittlere arithmetische Teilchengrößen betragen von 0,1 bis 300 µm und insbesondere von 1 bis 100 µm. Die Teilchengrößenverteilung und die mittlere arithmetische Teilchengröße werden in der Regel mittels Fraunhofer-Laserbeugung bestimmt (0,015 Vol.-%ige Dispersion des Calciumcarbonatpulvers in Wasser). Für nähere Einzelheiten sei auf M. Kerker, The Scattering of Light, Academic Press, New York, 1969 oder H.G. Borth, Modern Methods of Particle Size Analysis, John Wiley & Sons, New York, 1984. verwiesen. Derartige Pulver sind im Handel beispielsweise unter dem Warenzeichen Mikhart® der Firma Heubach GmbH, DE, erhältlich.

Als Komponente D) können die erfindungsgemäßen Formmassen 0 bis 80, vorzugsweise 0 bis 50 Gew.-% und insbesondere 0 bis 40 Gew.-% weiterer Zusatzstoffe und Verarbeitungshilfsmittel enthalten.

Als verstärkend wirkende Füllstoffe (welche verschieden von C) sind) in Mengen bis zu 50 Gew.-%, vorzugsweise bis zu 40 Gew.-% seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 µm, insbesondere 0,1 bis 0,5 µm aufweisen.

Andere geeignete Füllstoffe sind beispielsweise Wollastonit, Glaskugeln, Quarzmehl, Si- und Bornitrid oder Mischungen dieser Füllstoffe.

Bevorzugte Kombinationen von Füllstoffen sind: Wollastonit mit Glasfasern, wobei Mischungsverhältnisse von 5:1 bis 1:5 bevorzugt sind.

Als weitere Zusatzstoffe seien, in Mengen bis zu 50, vorzugsweise 0 bis 40 Gew.-%, schlagzäh modifizierende Polymere (im folgenden auch als kautschukelastische Polymerisate oder Elastomere bezeichnet) genannt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/ 100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyltricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Die EPDM-Kautschuke können auch mit weiteren Monomeren gepfropft sein, z.B. mit Glycidyl(meth)acrylaten, (Meth)acrylsäureestern und (Meth)acrylamiden.

Eine weitere Gruppe bevorzugter Kautschuke sind Copolymere des Ethylens mit Estern von (Meth)acrylsäure. Zusätzlich können die Kautschuke noch Epoxy-Gruppen enthaltende Monomere enthalten. Diese Epoxygruppen enthaltende Monomere werden vorzugsweise durch Zugabe Epoxygruppen enthaltenden Monomeren der allgemeinen Formeln I oder II zum Monomerengemisch in den Kautschuk eingebaut 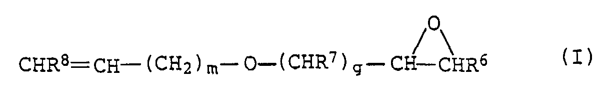 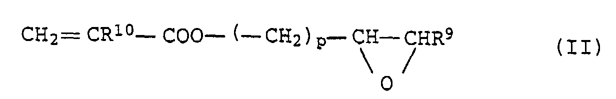 wobei R⁶ - R¹⁰ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R⁶ bis R⁸ Wasserstoff, wobei m für 0 oder 1 und g für 1 steht. Die entsprechenden Verbindungen sind Allylglycidylether und Vinylglycidylether.

Bevorzugte Verbindungen der Formel II sind Epoxygruppen-enthaltende Ester der Acrylsäure und/oder Methacrylsäure, wie Glycidylacrylat und Glycidylmethacrylat.

Vorteilhaft bestehen die Copolymeren aus 50 bis 98 Gew.-% Ethylen, 0 bis 20 Gew.-% Epoxygruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen, insbesondere 0,3 bis 20 Gew.-% Glycidylacrylat und/oder
- 0 bis 40,: insbesondere 0,1 bis 20 Gew.-% Glycidylmethacrylat, und
- 1 bis 50,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Amino- oder Amidgruppen sowie funktionelle Gruppen, die durch Mitverwendung von Monomeren der allgemeinen Formel 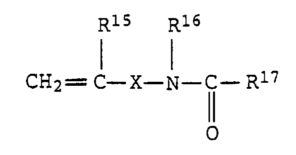 eingeführt werden können,
wobei die Substituenten folgende Bedeutung haben können:
- R¹⁵: Wasserstoff oder eine C₁- bis C₄-Alkylgruppe,
- R¹⁶: Wasserstoff, eine C₁- bis C₈-Alkylgruppe oder eine Arylgruppe, insbesondere Phenyl,
- R¹⁷: Wasserstoff, eine C₁- bis C₁₀-Alkyl-, eine C₆- bis C₁₂-Arylgruppe oder -OR₁₈
- R¹⁸: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder

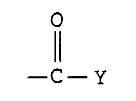

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente D) bis zu 5 Gew.-%, vorzugsweise nicht mehr als 3 Gew.-%, bezogen auf D).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexylacrylat oder deren Mischungen, ggf. zusammen mit vernetzenden Monomeren | Styrol, Acrylnitril, (Meth)acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere D) können auch nach anderen üblichen Verfahren, z.B. durch Suspensionspolymerisation, hergestellt werden.

Als weitere geeignete Elastomere seien thermoplastische Polyurethane genannt, wie sie beispielsweise in der EP-A 115 846 beschrieben sind.

Selbstverständlich können auch Mischungen der vorstehend aufgeführten Kautschuktypen eingesetzt werden.

Die erfindungsgemäßen Formmassen können noch weitere übliche Zusatzstoffe und Verarbeitungshilfsmittel enthalten. Nur beispielhaft seien hier Zusätze zum Abfangen von Formaldehyd (Formaldehyd-Scavenger), Weichmacher, Schmiermittel, Haftvermittler, Lichtstabilisatoren und Pigmente genannt. Der Anteil solcher Zusätze liegt im allgemeinen im Bereich von 0,001 bis 5 Gew.-%.

Als Nukleierungsmittel können die erfindungsgemäßen Formmassen gemäß einer bevorzugten Ausführungsform ein Malein-Formaldehyd-Kondensat enthalten. Geeignete Produkte werden z.B. in der DE 25 40 207 beschrieben.

Entsprechende Verbindungen sind dem Fachmann bekannt und beispielsweise in der EP-A 327 384 beschrieben.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die erfindungsgemäßen thermoplastischen Formmassen zeichnen sich durch ein ausgewogenes Eigenschaftsspektrum aus. Daraus hergestellte Formteile zeigen ein gutes Gleitreibeverhalten bei gleichzeitig erhaltenen mechanischen Eigenschaften. Daher eignen sich derartige Formteile insbesondere zur Anwendung als Formkörper wie Zahnräder, Kettenglieder, Gleitrollen und Gleitschienen.

### Beispiele

Es wurden folgende Komponenten eingesetzt:
Komponente A)
   Polyoxymethylencopolymerisat aus 97,3 Gew.-% Trioxan und 2,7 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer eine Schmelzvolumenrate von 7,5 cm³/10 min. (190°C, 2,16 kg Auflagegewicht nach ISO 1133).
Komponente B)
   Polyvinylpyrrolidon mit einem mittleren Molekulargewicht (Gewichtsmittel M_{w}) von 45 000 (Luviskol® K30 der BASF AG).
Komponente C)
   Calciumcarbonat der mittleren arithmetischen Teilchengröße von 3 µm (Mikhart®2 der Firma Heubach, DE).

Zum Vergleich wurden Glycerindistearat (als GDS in den folgenden Tabellen abgekürzt) und Molybdändisulfid in den angegebenen Mengen eingesetzt.

Zur Herstellung der Mischungen wurde Komponente A mit den in Tabelle 1 angegebenen Mengen der anderen Komponenten gemischt und in einem Zweischneckenextruder bei 220°C compoundiert, entgast und als Strang ausgepreßt sowie granuliert. Anschließend wurden bei 190°C Probekörper hergestellt.

Der Zugversuch zur Bestimmung von Zug-E-Modul, der Bruchspannung, Streckspannung und Bruchdehnung erfolgte gemäß ISO 527-2 (Probekörper gemäß ISO 3167).

Die Gleitreibemessungen erfolgten gemäß DIN 31680. Die Messungen erfolgten mit dem Tribosystem Stift/Scheibe, Grundkörper Stahl, Gegenkörper Kunststoffstift bei 25°C, Flächenpressung 1MPa, Gleitgeschwindigkeit 0,5 m/s, Gleitstrecke pro Meßpunkt 20 km, Gleitflächentemperatur ≤ 40°C.

Der MVR wurde gemäß ISO 1133 bestimmt.

Die thermische Stabilität wurde am Granulat über 2 Stunden bei 222°C in Luft und in Stickstoff (Einwaage: 1,2 g) gravimetrisch bestimmt.

Die Zusammensetzungen der Formmassen und die Ergebnisse der Messungen sind der Tabellen 1 und 2 zu entnehmen.

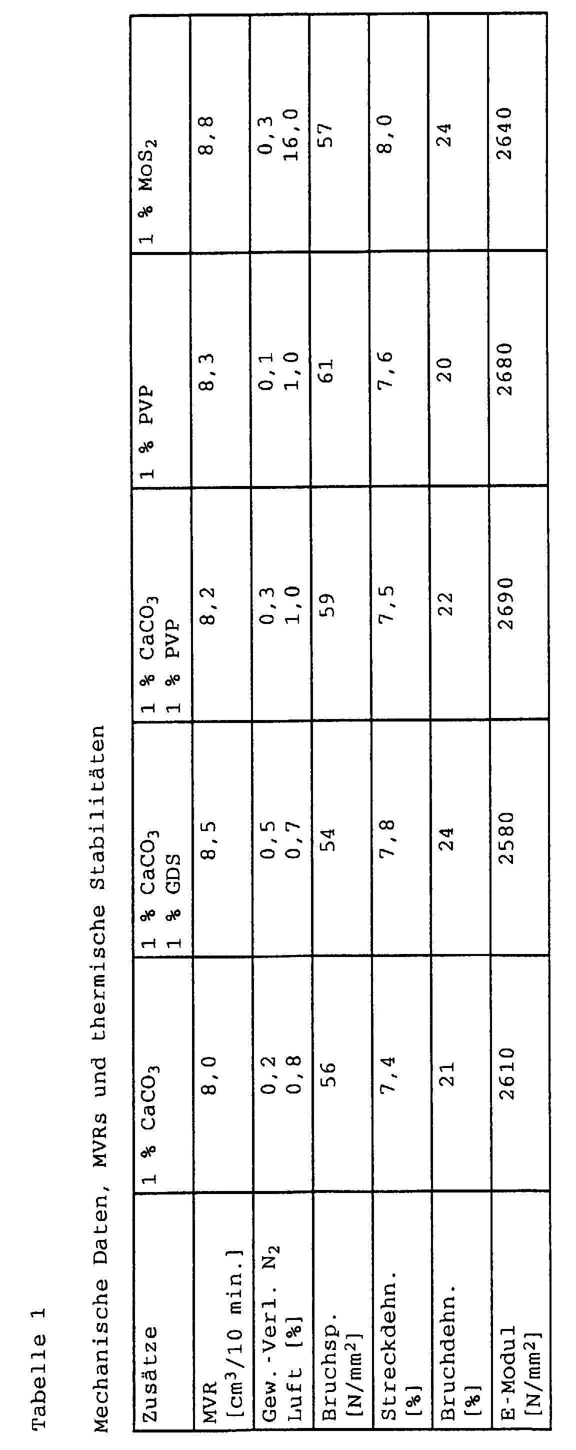

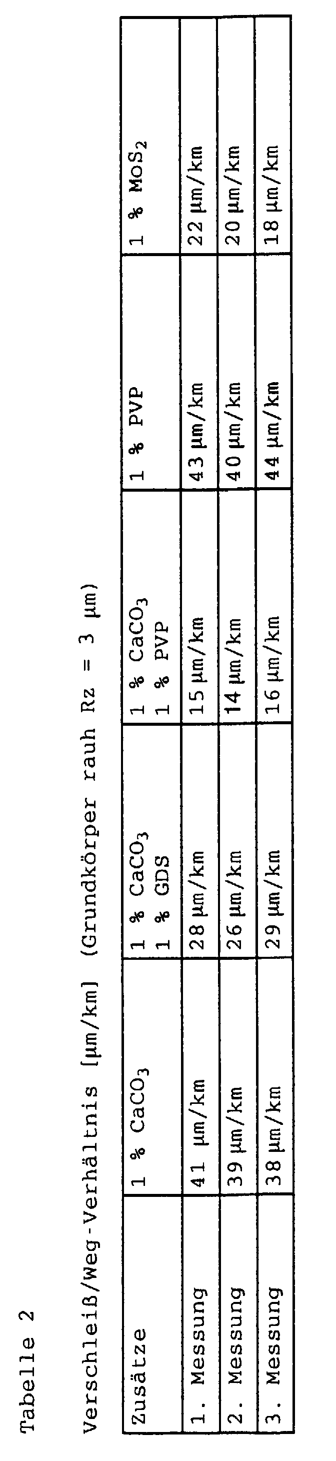

## Patentansprüche

1. Thermoplastische Formmassen, enthaltend
A) 10 bis 99 Gew.-% eines Polyoxymethylenhomo- oder Copolymerisats,
B) 0,1 bis 5 Gew.-% eines Polyvinylpyrrolidons,
C) 0,1 bis 10 Gew.-% eines Calciumcarbonates,
D) 0 bis 80 Gew.-% weiterer Zusatzstoffe und Verarbeitungshilfsmittel,
wobei die Summe der Gewichtsprozente der Komponenten A) bis D) jeweils 100 % ergeben.

2. Thermoplastische Formmassen nach Anspruch 1, enthaltend 0,1 bis 7,5 Gew.-% Komponente C).

3. Thermoplastische Formmassen nach den Ansprüchen 1 oder 2, enthaltend 0,1 bis 3 Gew.-% Komponente B).

4. Thermoplastische Formmassen nach den Ansprüchen 1 bis 3, in denen die Komponente C) ein teilchenförmiger Füllstoff mit einer mittleren arithmetischen Teilchengröße von 0,1 bis 300 µm ist.

5. Verwendung der thermoplastischen Formmassen gemäß den Ansprüchen 1 bis 4 zur Herstellung von Fasern, Folien und Formkörpern.

6. Formkörper, erhältlich gemäß aus den thermoplastischen Formmassen gemäß den Ansprüchen 1 bis 4.

## Claims

1. A thermoplastic molding composition comprising
A) from 10 to 99 % by weight of a polyoxymethylene homo- or copolymer,
B) from 0.1 to 5 % by weight of a polyvinylpyrrolidone,
C) from 0.1 to 10 % by weight of a calcium carbonate,
D) from 0 to 80 % by weight of other additives and processing aids,
where the sum of the percentages by weight of components A) to D) is always 100 %.

2. A thermoplastic molding composition as claimed in claim 1, comprising from 0.1 to 7.5 % by weight of component C).

3. A thermoplastic molding composition as claimed in claim 1 or 2, comprising from 0.1 to 3 % by weight of component B).

4. A thermoplastic molding composition as claimed in any of claims 1 to 3, in which component C) is a particulate filler having an arithmetic mean particle size of from 0.1 to 300 µm.

5. The use of a thermoplastic molding composition as claimed in any of claims 1 to 4 for producing fibers, films or shaped articles.

6. A shaped article obtainable from a thermoplastic molding composition as claimed in any of claims 1 to 4.

## Revendications

1. Masses à mouler thermoplastiques contenant
A) 10 à 99% en poids d'un copolymère ou d'un homopolymère de polyoxyméthylène,
B) 0,1 à 5% en poids d'une polyvinylpyrrolidone,
C) 0,1 à 10% en poids d'un carbonate de calcium,
D) 0 à 80% en poids d'autres additifs et agents auxiliaires de traitement,
où la somme des pourcentages en poids des composants A) à D) donne à chaque fois 100%.

2. Masses à mouler thermoplastiques selon la revendication 1, contenant 0,1 à 7,5 % en poids de composant C).

3. Masses à mouler thermoplastiques selon la revendication 1 ou 2, contenant 0,1 à 3 % en poids de composant B).

4. Masses à mouler thermoplastiques selon l'une quelconque des revendications 1 à 3, dans lesquelles le composant C) est une matière de charge sous forme de particules ayant une granulométrie en moyenne arithmétique de 0,1 à 300 µm.

5. Utilisation des masses à mouler thermoplastiques selon l'une quelconques des revendications 1 à 4 pour la fabrication de fibres, de feuilles et de corps moulés.

6. Corps moulés obtenus à partir des masses à mouler thermoplastiques selon l'une quelconque des revendications 1 à 4.
